# EUROPEAN PATENT SPECIFICATION

(11) **EP 1 980 083 B1**
(45) Date of publication and mention of the grant of the patent: **14.09.2011**
(21) Application number: 07708117.2
(22) Date of filing: 31.01.2007
(51) Int. Cl.: H04W 12/06, H04W 40/24

(54) **METHOD FOR PERSONAL NETWORK MANAGEMENT ACROSS MULTIPLE OPERATORS**
VERFAHREN ZUR VERWALTUNG PERSÖNLICHER NETZWERKE ÜBER MEHRERE BETREIBER
PROCÉDÉ POUR LA GESTION DE RÉSEAU PERSONNEL À TRAVERS UNE PLURALITÉ D'OPÉRATEURS

(30) Priority: 31.01.2006 WO PCT/JP2006/301950; 18.04.2006 US 792613 P
(43) Date of publication of application: 15.10.2008
(73) Proprietor: Panasonic Corporation, Kadoma-shi Osaka 571-8501 (JP)
(72) Inventor: KUMAR, Sampath, Swaroop c/o Panasonic Singapore Labratories Pte. Ltd., Tai Seng Industrial Estate Singapore 534415 (SG); LIM, Chun Keong Benjamin c/o Panasonic Singapore Labratories Pte. Ltd., Tai Seng Industrial Estate Singapore 534415 (SG); TAN, Pek Yew c/o Panasonic Singapore Labratories Pte. Ltd., Tai Seng Industrial Estate Singapore 534415 (SG)
(74) Representative: Grünecker, Kinkeldey, Stockmair & Schwanhäusser Anwaltssozietät
(86) International application number: PCT/JP2007/052068
(87) International publication number: WO 2007/089024

(56) References cited:
- WO-A-00/24175
- JACOBSSON M ET AL: "Privacy and Anonymity in Personal Networks" PERVASIVE COMPUTING AND COMMUNICATIONS WORKSHOPS, 2005. PERCOM 2005 WORKSHOPS. THIRD IEEE INTERNATIONAL CONFERENCE ON KAUAI ISLAND, HI, USA 08-12 MARCH 2005, PISCATAWAY, NJ, USA,IEEE, 8 March 2005 (2005-03-08), pages 130-135, XP010779714 ISBN: 0-7695-2300-5

## Description

### Technical Field

The present invention pertains to provide la Personal Network Management (PNM) solution in a multi-operator scenario.

### Background Art

[International Patent application 1], NOVIKOV, Aleksey et al: "Authentication for information exchange over a communication network", International Patent Application WO 00/24175 A, 27 April 2000.

[Non Patent Document 1], TAKEI, Yoshihiko and CHIA, Pei Yen, "Input to PNM", TSG-SA WG1 #29, 11th July 2004, Document name S1-050695

[Non Patent Document 2], Jacobsson Metal : "Privacy and Anonymity in Personal Networks" PERVASIVE COMPUTING AND COMMUNICATIONS WORKSHOPS, 2005. PERCOM 2005 WORKSHOPS. THIRD IEEE INTERNATIONAL CONFERENCE ON KAUAI ISLAND, HI, USA 08-12 MARCH 2005, PISCATAWAY, NJ, USA, IEEE

Personal Networks is relatively a new concept in 3G networks, where a user has all his devices in a closed network, regardless of the location of his devices. One of the differences between a LAN and a Personal Network is the absence of distance or range constraints in a Personal Network. The other difference is the access control provided by the service provider that the Personal Network elements are private to the Host and session or general requests to them may be filtered by the service provider. Thus a user is able to control, configure and access any of his devices or content with privacy.

[International Patent Application 1] mentions a method for authentication for message sequence between a host and a guest by use of an authentication server. The guest has the guest key which it uses for authentication with the authentications server and the host. However this patent focuses on single domain authentication where one authentication server manages or handles the host and its guest. In a multiple domain system, different devices are managed by different domains, and each domain would like to restrict the information exchange regarding its own devices or users to itself. There is also a need for minimizing the signaling between these multiple domains. To achieve this, the current invention allocates only routing and intra domain authentication capabilities to the proxy handled by the foreign domain. Thus the guest device is able to authenticate itself as a device to its own domain. Then its domain securely routes or forwards its messages to the home domain of the Master device where again the guest device authenticates itself with respect to PN service.

[Non Patent Document 1] mentions a central entity named Personal Network Management (PNM), which is responsible for management of a user's Personal Network. One of the main functions of this entity is allowing a user to add or delete devices and allowing the user to easily choose an active device to which he needs to terminate his services (video, telephony, etc). Additionally, the user may also retrieve the current state of all the devices in the PN, that is view their current capabilities, configure settings of these devices by using the user interfaces provided by the PNM entity.

[Non Patent Document 2] describes an architecture and security requirements in an ad hoc Personal Network scenario. The paper assumes that there is no intervention from the service provider or operator in managing the personal network of the user which is different from the focus of this invention. This invention assumes that the user is subscribed to a particular service provider who provides management applications for the set of devices that he owns virtually forming a personal network. The security between two devices is ensured by the respective service providers. The target of this invention is to provide a solution in providing privacy in personal networks managed by different service providers or domains, and minimize the information exchange between them to achieve that.

A PNM ensures that a user's devices remain personal to him, and controls access to a user device where a user device's ID is known by its global ID or public ID. The global ID may be in the form of Mobile Station Integrated Services Digital Network (MSISDN), Internet Protocol (IP) address, Uniform Resource Locator (URL), but not limited to these. This ID allows a user to be contacted by anyone who knows that number. The idea of a Personal Network is to maintain connectivity between devices irrespective of their location, and to probably keep them private. The PNM maintains connectivity, privacy and confidentiality between each of those devices, very'much like how mobiles are managed with the difference being these devices may accessible by only the owner of the Personal Network.

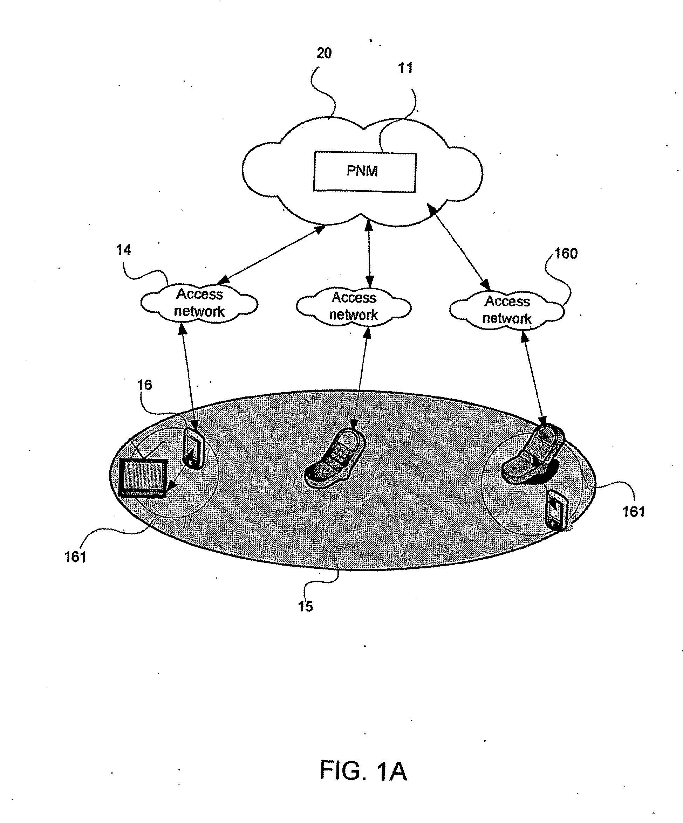

FIG. 1A describes a system where each PNM may be owned or managed by an operator with whom a user has a subscription for his devices. The user accesses the PNM system through various access network systems like WLAN or cellular or WiMAX or fixed broadband. Therefore the user is able to feel an access-agnostic seamless network of his devices. So, it is important that this central entity or PNM manages these devices to give the user a perception that these devices are seamlessly interconnected, and provide personalized services to the user, regardless of his or the device location. This brings in another dimension to setting up this central entity since there are many operators who provide mobile network service, and each operator may or may not provide PNM functionality.

WO 2007089024 A1 relates to a method for accessing a Personal Network from a Guest device. In this method, the Guest device receives a service key from a Master device of the Personal Network to which the Guest device wishes to access. The Guest device then sends the Device ID of the Master device to a Proxy. The Proxy associates a route for accessing the Master device from the Guest device based on the Device ID of the Master device and the Device ID of the Guest device, and sends an acknowledgement to the Guest device. The Proxy may use its Proxy data to further filter requests based on pre-registration status of requesting Guest Devices. If already pre-registered, the Proxy routes the PN request of the Guest Device to the Personal Network Management. The Personal Network Management verifies the service key to authenticate the Guest device.

### Disclosure of Invention

However, even if operators provide PNM, a problem arises in providing interoperability between operators to provide the host a seamless experience, while keeping core network communication as minimal as possible.

This invention aims to provide a PNM solution in a multi-operator scenario. The'motivation of the current invention is to allow the PNM to add user devices irrespective of which operator they are subscribed to, while limiting the number of PNM access requests by guest users to a minimum by having an initial filtering system at the proxy which is enabled by a database at the foreign network, at the same time ensuring that the devices that are allowed to access the PNM are authenticated by the particular foreign operator.

This object is solved by the invention as claimed in the independent claim. Preferred embodiments of the invention are defined by the dependent claim.

### Brief Description of Drawings

The above and other objects and features of the invention will appear more fully hereinafter from a consideration of the following description taken in connection with the accompanying drawing wherein one example is illustrated by way of example, in which;
FIG. 1A is a diagram illustrating the system of a Personal Network Management system managed by a single service provider.
FIG. 1B is a diagram illustrating the preferred System for PNM across multiple operators, according to the preferred embodiment of the invention.
FIG. 2 is a diagram illustrating the components of PNM, according to the preferred embodiment of the invention
FIG. 3 is a diagram illustrating the components of Personal Network Info, according to the preferred embodiments of the invention.
FIG. 4 is a diagram illustrating the components of Proxy, according to the preferred embodiment of the invention.
FIG. 5 is a diagram illustrating the components of Proxy Data, according to the preferred embodiments of the invention.
FIG. 6 is a diagram illustrating the components of a Master Device, according to the preferred embodiment of the invention.
FIG. 7 is a diagram illustrating the components of a Guest Device, according to the preferred embodiment of the invention.
FIG. 8 is a sequence diagram for Guest Device setup with service authentication and device authentication, according to the preferred embodiment of the invention.
FIG. 9 is a sequence diagram for Guest Device setup with service authentication, according to another embodiment of the invention.
FIG. 10 is a sequence diagram for Guest Device setup with device authentication, according to another embodiment of the invention.
FIG. 11 is a sequence diagram for Guest Device access into Personal Network with service authentication and device authentication, according to the preferred embodiment of the invention.
FIG. 12 is a sequence diagram for Guest Device access into Personal Network with service authentication, according to the preferred embodiment of the invention.
FIG. 13 is a sequence diagram for Guest Device access into Personal Network with device authentication, according to the invention.
FIG. 14 is the user interface that the Master Device may provide to enable addition of a Guest Device, according to the preferred embodiment of the invention.
FIG. 15 is the user interface that the Guest Device may provide to access a PN, according to the preferred embodiment of the invention.

### Best Mode for Carrying Out the Invention

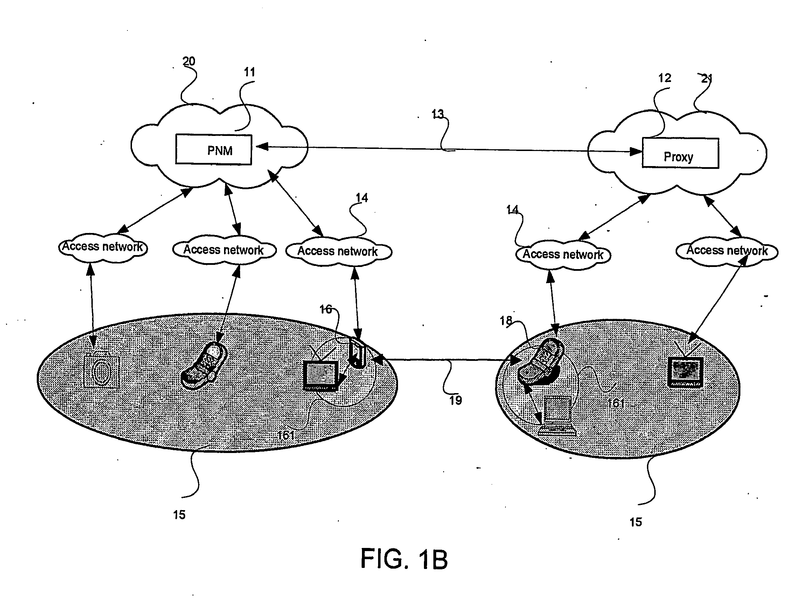

Figure 1b illustrates an overall system of the present invention, which is a PNM solution in a multi-operator scenario PNM solution in a multi-operator scenario consists of Master Device 16, PNM 11, Proxy 12, and Guest Device 18.

A Master Device 16 is a device in a Personal network, with management abilities such as registering or deregistering a device in a Personal Network, access control responsibilities, etc, but not limited to these.

Personal Network Management (PNM) 11 is a entitymanaging a user's Personal Network, enabling multiple devices to communicate with each other with seamless connectivity irrespective of their respective locations. It allows the user to have control over his Personal Network by enabling access control techniques.

Proxy 12 is an entity supporting the PNM providing device authentication and further filtering mechanisms for optimizing the communication between multiple operators. The objective of the proxy is to minimize communication between the operators thus reducing the burden on core networks, distribute authentication functionalities to respective trust domains and ensure secure routability. The Proxy 12 may be hosted by the operators where devices under their subscription may be registered as Guest Devices 18 in PNs managed by other operators.

Guest Device 18 is a Client's device whose subscription is with the Foreign Operator and gains access into a Personal Network managed by the Home Operator.

To help understand the invention, the following conventions are used.

Master Device 16 and Guest Device 18 may be part of their respective Personal Network 15. Personal Network 15 is a network consisting of more than one device under the control of a single user. The devices are managed in such a way that the user perceives a continuous secure connection. A Personal Network 15 may consist of a Master Device through which a user controls his Personal network 15. The Personal network 15 may also consist of Native and Guest Devices 18 which are under the control of the Master Device, where Native Devices have subscriptions with the home operator 20, and Guest Devices 18 have subscriptions with the foreign operator.

Host is a user who owns and controls his Personal Network.

Client is a user wishing to access the Host' s Personal Network 15. It is possible for the host and client may be the same user.

Host's operator will be referred to as the Home Operator, where the Home Operator 20 manages the Host's Personal Network 15.

The client has a subscription with the Foreign Operator 21. The foreign operator 21 may also be offering PN services to the client.

An operator is the network operator or the service provider providing services to a subscriber.

In the following description, for purposes of explanation, specific numbers, times, structures, protocol names, and other parameters are set forth in order to provide a thorough understanding of the present invention. However, it will be apparent to anyone skilled in the art that the presented invention may be practiced without these specific details. In other instances, well-known components and Modules are shown in block diagram in order not to obscure the present invention unnecessary.

It will become evident from the following discussion that the embodiments of the present applications set forth herein, are suited for use in a wide variety of applications, and are not necessarily limited in application t'o the Personal Network 15 scenario presented here.

When a user needs to add a device with a subscription with another operator, it needs to be ensured that the process by which the user adds a device with alternate subscription is not duplicable by other users.

In other words, it is important to protect the Host's Personal Network 15 by restricting access to anybody other than users registered in his Personal Network 15.

The term operator is a general term, and may refer to public mobile networks, WLAN systems, wireless personal area networks, but not limited to these.

The invention allows users to add devices with subscriptions with foreign networks, thus providing a user freedom to add any devices he wishes into his Personal Network 15. These devices with foreign network subscriptions may be his own, or may belong to another user with whom he may have a trust relationship, e.g. his family and friends.

Generally, there may be a Master Device(s) 16 in a Personal Network 15 enabling user procedures for the. Personal Network 15, for example, registering or deregistering other devices into the Personal Network 15. It is suggested that the Master Device 16 may be the device that interacts with the Guest Device 18, although alternate implementations are possible with other devices interacting with the Guest Device 18. This is to allow a user to enable centralized control within his Personal Network 15, avoiding synchronization complications with multiple devices having decision-making capabilities.

FIG. 1B illustrates a preferred system for the current invention. It consists of a PNM 11 entity at the Home Operator 20, a Master Device 16 of a Personal Network 15 of a given Host and with a subscription with the Home Operator 20, a Proxy 12 at the Foreign Operator 21 which co-ordinates with the PNM 11 by performing device authentication if required, enabled by Proxy Data 123 that stores details of devices with a subscription at the Foreign Operator 21 and registered as guest devices at a particular PN managed by PNM of Home Operator 20, and providing routing facilities to devices which request access to PNM 11 of the Home Operator 20, and a Guest Device 18 which may request access into a certain Personal Network 15 with a subscription with the Foreign Operator 21. Link 13, a secure link, may use SS7 or IP or ATM signaling but not limited to these. Link 14, a secure link, may be cellular access, Wireless LAN, IP, or fixed broadband access but not limited to these. Link 19, a secure link, may be a Bluetooth access, IP, cellular, ATM, Wireless LAN, physical contact using portable memory devices such as Smart Cards, but not limited to this. Master Device 16 is an element of a Personal Network 15, with access control responsibilities, but not limited by this. A Master Device 16 may have control of which to devices to allow access to a Personal Network 15. In view of this invention, a Guest Device 18 is a device requesting access into a Personal Network 15 with a subscription to an operator different from the Home Operator 20. The Proxy 12 is used as a filtering system to limit the number of accesses of the PNM 11 by devices belonging to the Foreign Operator 21, and thereon safely route all requests to the respective PNM thereby limiting and securing the traffic between the two operators/networks. It consists of a Proxy Data 123 whichmaybe implemented as a limited/static or semi-static database of PN pre-registrations. The database at the PNM 11, that is the Personal Network Info 113, may be dynamic and maintain real time or close to real time data. The PNM 11 may then act as a final authentication entity, where it further verifies the Guest Device 18 with its knowledge of the service key which may be in the form of an encrypted key, or a password, or a pin ID, but not limited to these. This allows the Home Operator 20 to limit the dependence on the Foreign Operator 21 to verify the Guest Device 18, since the Foreign Operator 21 implicitly verifies the Guest Device's subscription before verifying its pre-registration status using the Proxy Data 123.

In another embodiment of the invention, the Proxy 12 may be present at the Home Operator 20 itself. The system then enables a user to add other devices with subscriptions at the same operator. In this embodiment, Guest Devices have subscriptions at the same operator as the Master Device. In this case, the functionality of the Proxy 12 may be merged with that of the PNM. That is both the device authentication and the service authentication is performed by the PNM itself.

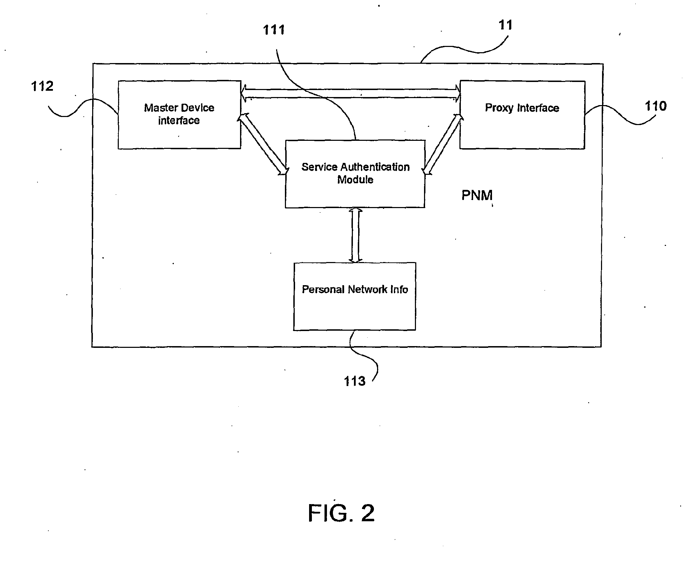

FIG. 2 illustrates the preferred components of the PNM 11. PNM is responsible for managing a user's Personal Network 15, allowing a user to access his Personal Network 15 irrespective of user or device location. This invention allows a PNM 11 entity to enable Personal Network 15 owners to add devices irrespective of which network/operator/administrative domain the Guest device's subscription belongs to.

PNM 11 may consist of a Master Device Interface (at PNM) 112, a Proxy Interface (at PNM) 110 and a service authentication Module 111. The Master Device Interface (at PNM) 112 interacts with a communication device, usually the Master Device 16 of a Personal Network 15. The access network at the Master Device Interface (at PNM) 112 is usually a wireless access such as WCDMA, CDMA2000, GSM or WLAN, but not limited to these. The Master Device Interface (at PNM) 112 receives Service Key 406 for Guests and acknowledges Guest Device setup. The Proxy Interface (at PNM) 110 interacts with the Proxy present at Foreign Operator 21 networks. The protocol at the Proxy Interface (at PNM) 110 is usually SS7 or IP or SIP but not limited to these. The Proxy Interface (at PNM) 110 associates a route for a Guest Device 18 with the PNM 11 it requests access to.

The service Authentication Module 111 enables authentication of a Guest Device 18 by managing the Service Key 406, where the service key may be in the form of a password, or a pin or a uniquely generated encryption key. Service authentication is used to enable owner control of access to Personal Network 15. For example, if the owner of a Personal Network 15 needs to stop access to a Guest Device 18, the owner may simply cancel the Guest Device access. Another advantage of this is that the Personal Network Info 113 may be kept dynamic and up to date with user's choices, and the Proxy Data 123 maybe kept relatively static, allowing minimal signaling to be required whenever the user changes his preferences. The PNM may also send the proxy an aggregated list of changes in guest device list periodically. The Master Device 16 may also change the Service Key 406. This is done by setting up another Service Key at the PNM. When an alternate Service Key 406 for the Guest Device is updated, the Service Authentication Module 111 does not allow the Guest Device to access since the Service Key 406 it will provide will not match with the updated Service Key 406. So even though the Guest Device 18 is device authenticated at the Proxy 12, it will be unable to authenticate itself at the PNM 11, therefore providing a user full control of access to his Personal Network 15.

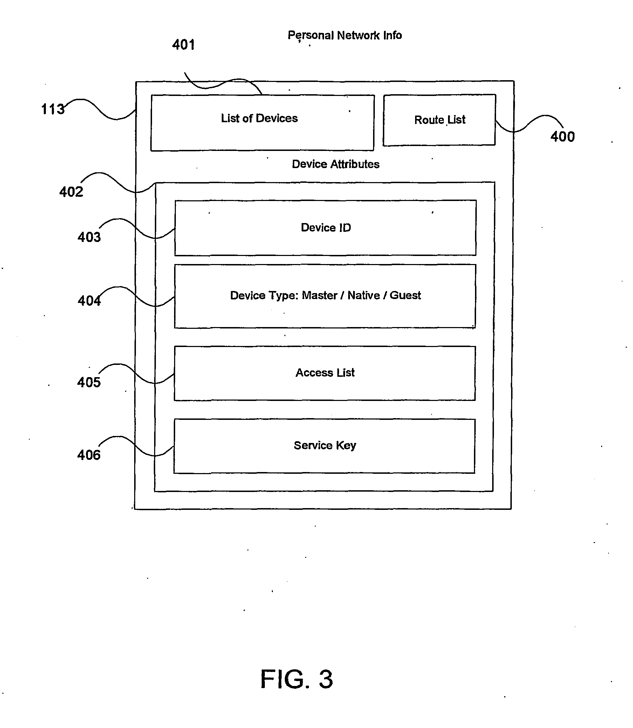

FIG. 3 illustrates the components of Personal Network Info 113. As stated earlier, the Personal Network Info 113 may contain all the details of the Personal Network 15 and may be dynamic to the user's preferences, and thus may immediately reflect the user's access control preferences. The Personal Network Info 113 may contain the list of devices 401 in the Personal Network. This list may contain the Device ID 403 of each of the devices. The Personal Network Info 113 also contains a Route List 400 which is a local routing table maintained to interconnect each of the devices. The Personal Network Info 113 may in addition also maintain separate routing lists 400 for each device based on access privileges of that device. Each device may have Device Attributes containing information on Device ID 403, Device Type 403, Access'List 405 and Service Key 406. The Device Type refers to whether a certain device is the Master Device 16 or a Native Device or a Guest Device 14. The Access List 405 contains the access privileges of each device set by the Master Device 16. The Service Key 406 is the key held by the Guest Device in order to gain authentication at the PNM 11.

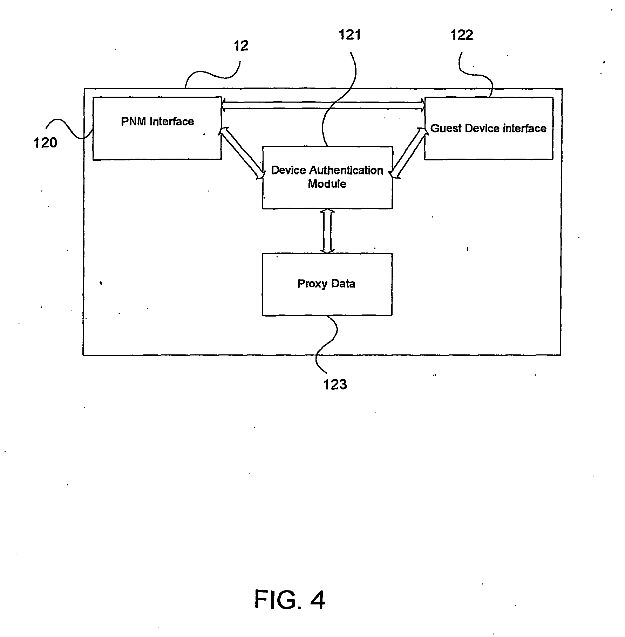

FIG. 4 illustrates the preferred components of the Proxy 12. The proxy may consist of two interfaces, the PNM interface and the Guest Device Interface. It may also consist of the Device Authentication Module 121 and Proxy Data 123. Proxy 12 is the PNM 11 counterpart in the Foreign Operator 21 network. It is understood that the Proxy 12 here may well be a PNM 11 entity at the Foreign Operator 21 coordinating with the PNM 11 entity at the Home Operator 20. The main function of the Proxy 12 is to authenticate the subscription of the Guest Device 18 requesting PN access, verify its pre-registration status using the proxy Data 123 database and to route a Guest Device 18 to a PNM 11 of desired operator. The Guest Device 18 may be charged for Proxy setup and usage. The Proxy 12 is required to allow secure and directed access to a PNM 11. The Proxy 12 may perform device authentication, to authenticate access requests to a certain PNM 11. In this way, a device requesting access into a Personal Network 15 at the PNM 11 has already been authenticated as a valid Guest Device 18. There is also implicit security in a device using a Proxy 12 to access a PNM 11, which is explained by the presence of a subscription Module 160 in the Guest Device 18. This subscription Module may be a SIM or USIM or alternate secure access methods, thus limiting access to Proxy 12 to valid subscription entities.

The Proxy 12 may have two Interfaces, a PNM interface (at Proxy) 120 and a Guest Device Interface (at Proxy) 122. The PNM Interface (at Proxy) 120 may be responsible for all communication with the PNM 11, including route association, obtaining Device ID 403 of the Guest Device 18 from the PNM, and providing a path or routing data from the Guest Device 18 to the PNM 11. The protocol at the PNM Interface (at Proxy) 120 is usually a IP or SIP or SS7 but not limited to these. Route association is associating a Guest Device request of connecting to a certain Personal Network, with the particular PNM managing that Personal Network and thereby routing all information concerned with that Personal Network or PNM to the PNM. The Guest device interface (at Proxy) 122 may be responsible for all communication with the Guest Device 18 and obtaining the Device ID of the Guest Device. The Guest Device Interface (at Proxy) 122 may be responsible for recognizing all data meant for the PNM 11, and passing this data onto the PNM Interface (at Proxy) 120 for routing it to PNM 11. The access network at the Guest Device Interface (at proxy) 122 is usually WLAN or WCDMA or CDMA2000 but not limited to these.

The device authentication Module 121 may first verify if the Guest Device 18 is a valid device. It then performs pre-registration check by verifying if the Guest Device 18 requesting access to the PNM 11 has been pre-registered by the particular PNM 11. If the Guest Device 18 has been pre-registered, Guest Device 18 is authorized to communicate with the PNM.

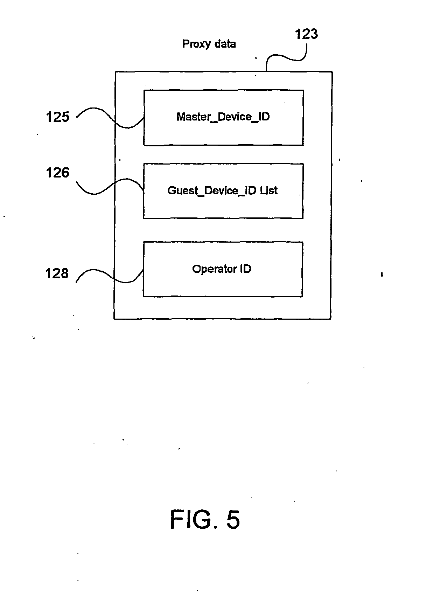

FIG. 5 illustrates the components of Proxy Data 123. Proxy Data 123 may refer to data relating to a Personal Network 15 which is pointed to by the Master Device ID 125. Each entry for a Master Device ID 125 may consist of a list of Guest Device Ids 126. In addition an entry for the Operator ID 128 (Home operator maintaining the subscription of the Master Device) may also be present. In most cases, the operator ID may be derived from the Master Device ID itself.

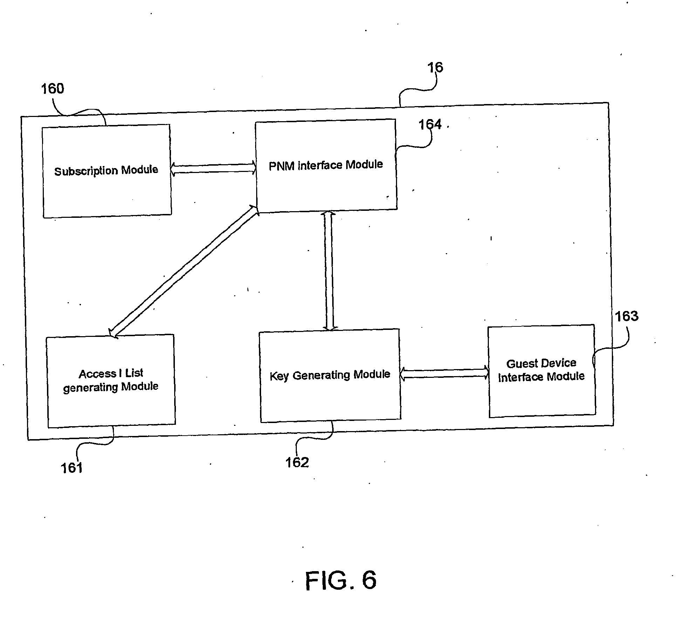

FIG. 6 illustrates the preferred components of Master Device 16, with Modules relevant to this invention. The Master Device 16 is a communication device and has a PNM Interface Module (at Master Device) 164 which is capable of communicating with the PNM 11. The PNM Interface Module (at Master Device) 164 may be responsible for key deposit at PNM 11, sending requests for Guest access and receiving acknowledgments from the PNM 11 when Guest Device 18 is setup for access. The access network at PNM Interface Module (at Master Device) 164 is usually a wireless access method such as WCDMA, CDMA2000, WLAN, or fixed broadband access, etc, but not limited to these.

The subscription Module 160 may contain subscription information and the authentication keys responsible for authenticating the device as having a valid subscription in a communication network.

The Access List generating Module 161 may be an application layer Module, which helps a user generate an Access List 405 which may set access privileges for the devices in a Personal Network. It may provide a simple user interface providing procedures to allow/disallow a Guest Device 16 to access a device in the Personal Network.

Key generating Module 162 may generate a Service Key 406 for a certain Guest Device 18. This key may be generated by random key generating functions, Rivest Shamir Adleman (RSA), Data Encryption Standard (DES), and other key generating functions, but not limited to these. The Service Key 406 is deposited both at the PNM 11 and the Guest device 117, and is the secret key shared by the PNM 11 and the Guest Device 18. Alternatively, this key may also be generated at the PNM 11 itself, and transferred back to the Master Device 16, to relay the Service Key 406 to the Guest Device 18.

Guest Device Interface Module (at Master Device) 184 is responsible for the secure key transfer to the Guest Device 18. The access network at the Guest Device Interface Module (at Master Device) 184 is usually direct contact (Secure Memory module) or Bluetooth or WLAN or fixed broadband access but not limited to these. The Service Key 406 may be transferred using a secure memory Module or alternate secure methods.

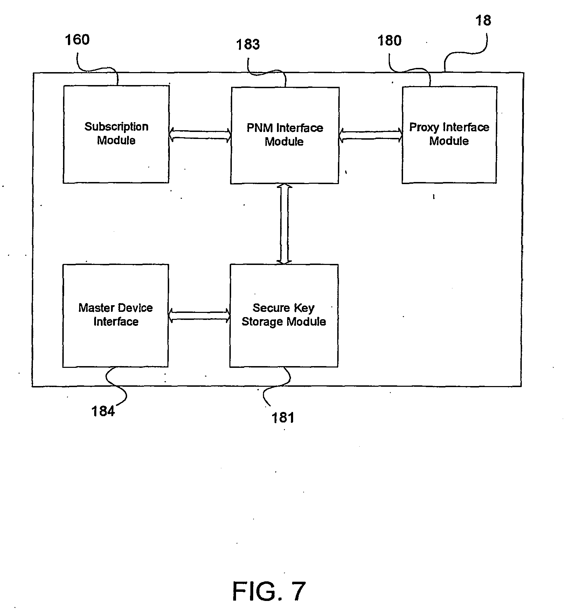

FIG. 7 illustrates a Guest Device 18, with Modules relevant to this invention. The Guest Device 18 is a communication device and may have a Proxy Interface Module (at Guest Device) 180, which is responsible for all communications with the Proxy 12, including requests for access to Proxy 12. The access network at the Proxy Interface Module (at Guest Device) 180 is a wireless access such as WCDMA or CDMA2000 or GSM or WLAN but not limited to these. The Proxy Interface Module (at Guest. Device) 180 may also be responsible for providing Device ID 403 authentication. This is done when the Guest Device 18 presents the Device ID 403 of the Master Device 16, and the Proxy 12 checks the list of the Guest Devices 18 under that particular Master Device 16. If the ID of the pre-registered Guest Device 18 matches the ID of the requesting device, device authentication is achieved.

The Guest Device 18 may also have a PNM Interface Module (at Guest Device) 183, which is responsible for communications with the PNM 11, including request for access to the Personal Network 15 providing the Service Key 406 as authentication. The PNM interface module uses the same access network as the Proxy interface Module (wireless or IP), but involves further signaling through the proxy (which acts as a router) to communicate with the PNM. The PNM 11 checks the Service Key 406 with the previously deposited Service Key 406 and if it is found to match, service'authentication is achieved.

The Guest Device 18 may also have a Master Device Interface (at Guest Device) 184 which enables secure transfer of the Service Key 406 from the Master Device 16 to the Guest Device 18. The access network at the Master Device Interface (at Guest Device) 184 may be a direct contact (Secure memory module) or Bluetooth or WLAN or IP but not limited by these. Master Device Interface (at Guest Device) 184 may also perform initial request for access of Personal Network.

The Guest Device 18 may also have a secure key storage Module 181, allowing the Guest Device 18 to access the Personal Network 15 at any point in the future, and not necessarily immediately after the Guest Device 18 setup. The Secure Storage Module 181 may be a Secure Memory or other secure storage modules. The Guest Device 18 may access the Personal Network 15 only until the Service Key 406 remains the same at the PNM 11. Once the Master Device 16 has changed the Service Key 406 at the PNM 11, the Guest Device 18 is no longer service authenticated. The Master Device 16 and the PNM 11 may maintain different Service Keys 406 for different Guest Devices 18.

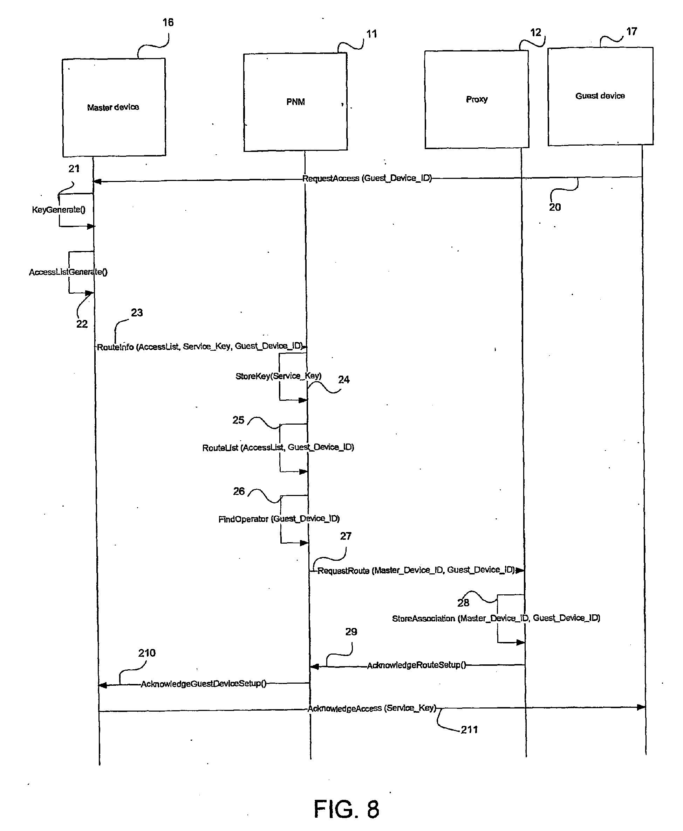

FIG. 8 is a sequence diagram explaining the preferred method for pre-registering a Guest Device 18 into a Personal Network 15, enabling service authentication, device authentication and Access List. In this preferred embodiment, when a Host wishes to add Guest Devices 18 with a subscription at a foreign network, he may obtain the Device ID 403 of this Guest Device 18. This Device ID 403 may be in the form of an MSISDN, or an IP address or a URL, but not limited by these. This Device ID 403 may be obtained through a request 20 by the Guest Device 18, or the Device ID 403 may already be known since it can also be a public ID (MSISDN or IP address or URL).

This ID may be used to identify the Guest device later at a time when the Guest Device 18 wishes to gain access to the Personal Network 15 through the Proxy 12. This helps the PNM 11 communicate only with valid devices, validity enabled by device authentication at the Proxy 12 itself. This will be clearer after the methods involved are explained.

In the preferred embodiment the Service Key 406 is generated in the Master device 16 by the Key Generating Module 162. Alternatively the key may be generated at the PNM itself, and transferred to the Master Device. Once the Master Device 16 obtains the Guest Device ID, the Key Generating Module 162 may generate a key used to provide a service level authentication for the Guest Device 18.

The Access List Generating Module 161 may then generate an Access List 405 based on owner preferences on access control for the particular Guest Device 18, where simple procedures to allow/disallow access to certain devices in a Personal Network may be implemented as a User Interface. As an example for the use of an Access List 405, if the user has five devices in his Personal Network 15, and wishes to share only three of them, the Access List 405 will instruct the PNM 11 that the Guest Device 18 will only be allowed those particular three devices, and not the other devices. This Access List 405 provides access control information for the PNM 11 entity. The PNM 11 entity may use this route info to make decisions on whether or not to allow the Guest Device 18 to access those devices.

Once the key and the Access List 405 are generated, the Master Device 16 may provide the PNM 11 with the route info 23 consisting of the Access List 405, the Service Key 406, and the ID of the Guest Device 18 through the PNM Interface Module (at Master Device) 164. The PNM 11 may store 24 the Access List 405, the Service Key 406, ID of the foreign device in the Personal Network Info 113. The PNM 11 may then use the Access List 405 to generate a lower level route list 25 with the Guest Device 18 included in it. This way the PNM 11 will be able to route information between the Personal Network 15 elements and the Guest Device 18, when the Guest Device 18 is registered into the network.

The user may also provide his own route list for certain devices. For example, in case the User's Master Device is to be accessed by the Guest Device and the normal route taken is a first hop to his Home Network and a second hop to his device. In some cases, the host may wish that the Guest Device does not go through his home Network. In such cases the User may be provided with procedures to determine specific routes to certain devices.

The PNM 11 entity may then derive the operator 26 or the HLR number of the Guest Device 18 from the ID of the Guest Device 18. Once the operator of the foreign device has been derived, the Proxy Interface (at PNM) 110 may request a route 27 with the Proxy 12 at the Foreign Operator 21, also providing the ID of the Guest Device 18. This route may be used to route all traffic from and to the Guest Device 18, once it gains access into the Personal Network 15. This route may be a dedicated path between the operators, or through IP (using IPSEC or alternate security protocols), or through SS7, but not limited to these. The assumption is that this route is secure.

The Proxy 12 may associate this route 28 with the IDs of the Guest Device 18 and the Master Device, which has a subscription under the particular Foreign Operator 21. This association is stored in the Proxy Data 123. Once this association is stored, the PNM interface (at Proxy) 120 may send an acknowledgement 29 to the PNM 11 entity that the Proxy 12 is ready to perform the routing and device-authentication for the Guest Device 18.

Once the PNM 11 receives this acknowledgement, it may relay acknowledgement 210 to the Master Device 16 conveying that the PNM 11 entity is ready to allow the Guest Device 18 into the Personal Network 15.

On receiving this acknowledgement the Master Device 16 may respond to the request of access by the Guest Device 18 by providing the Service Key 406 it generated previously 211 to the Guest Device through the Guest Interface Module (at Master Device) 184. This key may be transferred using a secure memory module (direct contact) or other secure access methods.

The Guest Device 18 may use this Service Key 406 when it requests the PNM 11 for access into the Personal Network 15. In addition the Secure Key Storage Module 181 may store the Service Key 406 in order to use at a later time.

Now, the Guest Device 18 is pre-registered to gain access to the PNM 11 whenever it wishes to, since both the PNM 11 and the Proxy 12 are ready to authenticate it and allow access into the Personal Network 15.

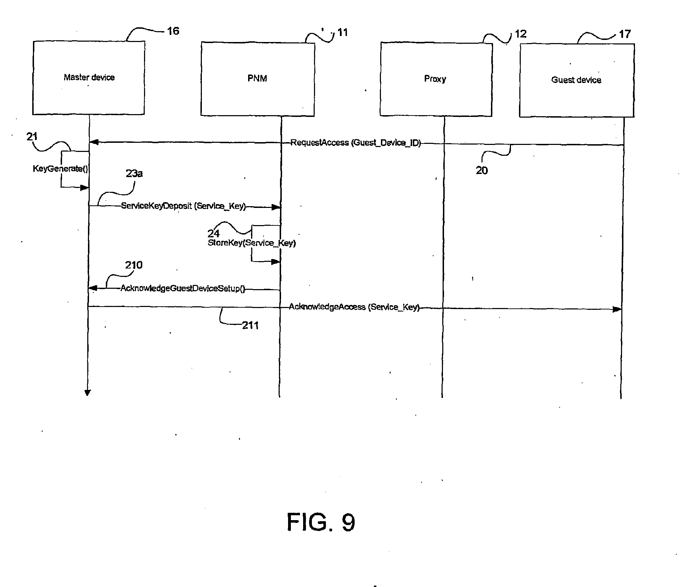

In another embodiment for pre-registering a Guest Device 18 into a Personal Network 15, FIG. 9 illustrates the method when only service authentication is implemented. This allows the complexity at the proxy to be reduced, since it simply functions as a forwarding device to the PNM 11. Therefore there needs to be minimal mutual agreement between operators. This embodiment may be preferred when the Proxy 12 functions with minimum requirements. The Proxy 12 simply forwards all PNM 11 access requests to the corresponding PNM 11. As a consequence of this, any Guest device 18 in possession of the Service Key 406 is able to gain access into the Personal Network 15.

Any Guest device 18 with the Service Key 406 may access his Personal Network 15. The system uses a single level of authentication at the PNM 11, thus avoiding device level authentication at the Foreign Operator 21. This simplifies the Proxy 12 as it simply relays information from the Guest Device 18 to the PNM 11. It is to be noted that this already authenticates the Guest Device 18 to communicate with the Proxy 12 with its PKI, which may be in the form of a SIM card, but not limited. The rest of the steps are similar to the preferred embodiment.

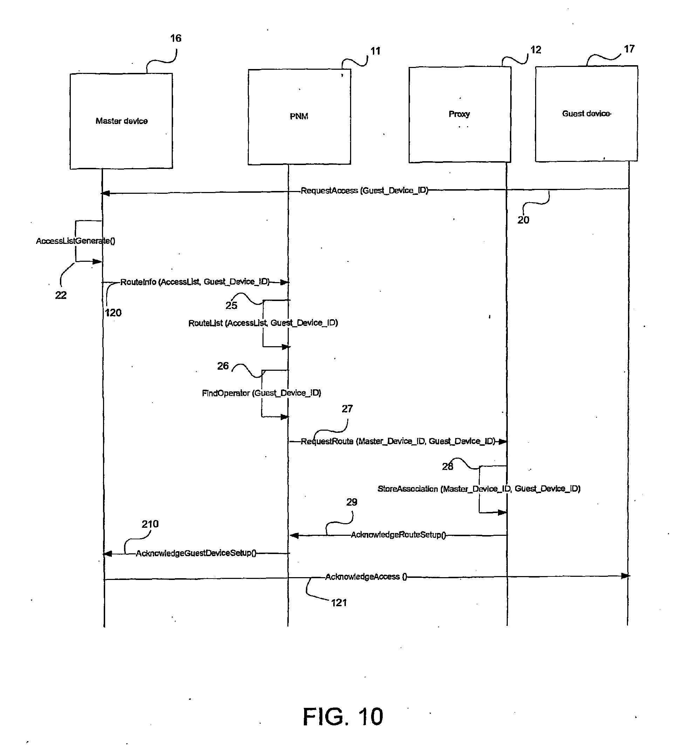

FIG. 10 illustrates another embodiment for pre-registering a Guest Device 18 into a Personal Network 15, in which the system may only implement device authentication. The advantage of this system is that there is no longer a need to manage Service Keys 406 for Guest Devices 18; however it will require additional pre-registering at the Proxy 18. Therefore, once a request is made 20 by a Guest Device 18, the Master Device 16 may generate 22 the Access List 405, and route info comprising of Device ID 403 and Access List 405 is sent to the PNM11 in step 120. The PNM 11 may then pre-register 20 the Guest Device 18 at the Proxy 12. The rest of the steps of 25, 26, 27, 28, 29, 210 are similar to the preferred embodiment. In this embodiment, there is no Service Key 406 generated, and therefore no transfer of Service Key 406 takes place between the Master Device 16 and the Guest Device 18 for the acknowledgement message as in step 121.

In.another embodiment, the system may not enable Access Lists 405. The Guest Device is able to access all the devices in the Personal Network. In this case, the system may use both service and device authentication, only service authentication or only device authentication.

There are two steps involved here, first the access to the PNM, and if that is granted, then' the access to the Personal Network 15. When a Guest Device 18 receives an acknowledgement of its request to access a Personal Network 15, the Guest Device 18 may receive a Service Key 406 from the Master Device 160 of the Personal Network 15 it wishes to access. Now the Guest Device 18 may have the credentials to access the Personal Network 15, which are its Device ID 403 providing an implicit device authentication and its Service Key 406 providing an explicit service authentication. The device authentication may be implicit since the Proxy 12 may be capable of verifying the Device ID 403 itself, as the Guest Device 18 belongs to the same domain.

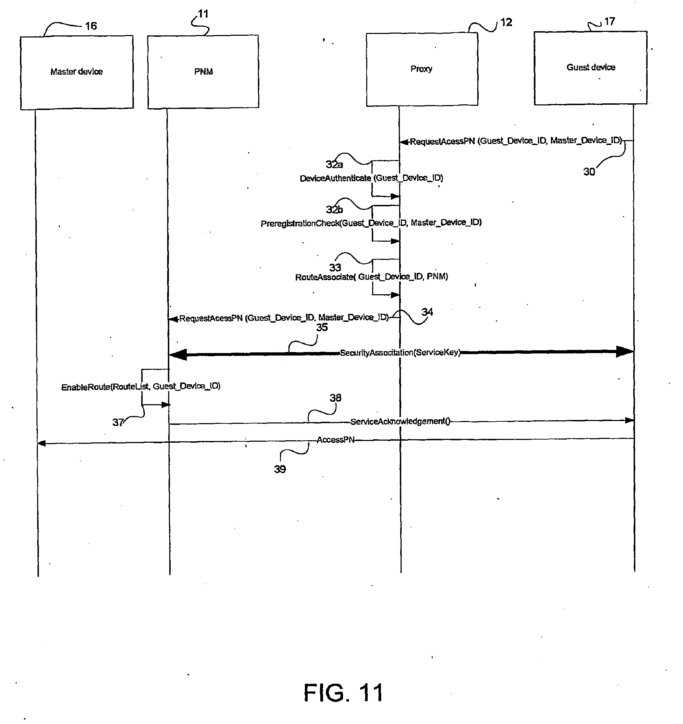

FIG. 11 illustrates the preferred method for Guest Device access into Personal Network. When a Guest Device 18 may wish to access the PNM 11, it may first request the Proxy 12 for a Proxy access 30 providing the IDs of itself and the Master Device 16 of the Personal Network 15 it wishes to have access to. The proxy verifies that the Guest Device is a valid device registered to the PLMN as in step 32a. Also, from the Device ID 403 of the Master Device 16, it may verify Proxy Data 123, which may contain a list of Master Devices which have registered Guest Devices 18. The proxy 12 may verify if the particular Master Device 16 is present in its list of Master Devices. If present, the proxy 12 may then verify if Guest Device 18 requesting access has been pre-registered by the Master Device 16 as in step 32b, thus enabling device authentication. Otherwise the request is denied by the proxy itself. Hence this filtering process enables the proxy to straight away deny devices that aren't registered into a PN, avoiding extending the authentication to the PNM and then receiving a negative response, thus resulting in unnecessary or redundant signaling. The Proxy 12 may then derive the identity 31 of the operator the Master Device 16 belongs to.

The proxy may then associate all data 33 from the Guest Device 18 to the corresponding PNM 11 thus associating a route with the ID of the Guest Device 18. All the data of the Guest Device 18 pertaining to the PNM 11 may now be routed to the PNM 11 by the Proxy 12. It then forwards the access request message sent by the Guest Device 18 to the PNM for further processing as in step 34. Once the PNM 11 receives the access request, it challenges the Guest Device 18 by testing its knowledge of the service key. If Guest Device 18 is able to authenticate itself using the service key, a security association or SA is established between the PNM 11 and the Guest Device 18 as in step 35. This authentication may be based on http or other generic authentication methods.

In the next step 37, the PNM may enable the route list for the particular Guest Device 18.

The PNM 11 may then send an acknowledgement to the Guest Device 18 that its request to be part of the Personal Network 15 has been granted 38.

The Guest Device 18 is now a part of the Personal Network 15 and may access the Personal Network 39.

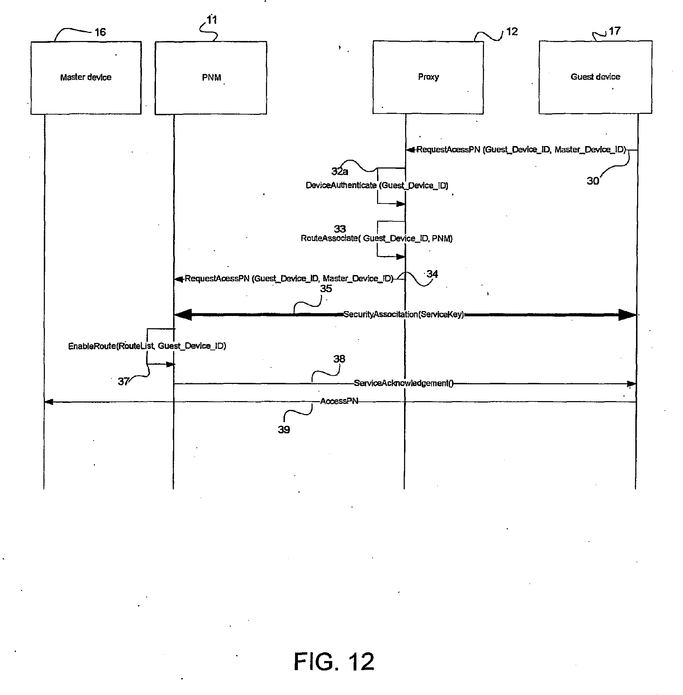

FIG. 12 illustrates another embodiment of Guest Device access of Personal Network, when only service authentication may be implemented in the Guest Device access into Personal Network. Again, in this embodiment, complexity in the Proxy 12 is avoided by the Proxy 12 simply acting as a forwarding device. The Device ID 403 of the Guest Device 18 may not be verified as being pre-registered by the Master Device. All requests of Proxy 12 access by a Guest Device 18 with a valid subscription may be granted. Therefore the Proxy 12 only acts as a routing device, routing all Guest Device 18 requests to the PNM 11 directly. Other steps in this embodiment are similar to FIG. 11.

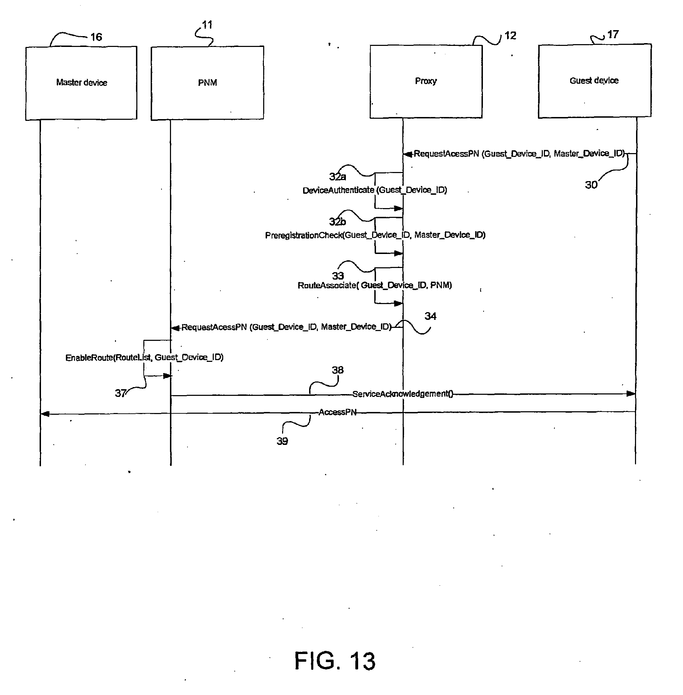

FIG. 13 illustrates another embodiment of Guest Device access of Personal Network when only device authentication may be implemented in the Guest Device access into Personal Network. In this embodiment, Service Key management is not required at the PNM. Here, all the steps 30, 31, 32a, 32b, 33, 34, 37, 38 and 39 are similar to the preferred embodiment except step 35 which is the service authentication stage and is not required. This embodiment assumes a semi-permanent trust in the Guest Device, and therefore may not need a Service Key generation.

In another embodiment, the system may not implement the Access List 405. Further more, the embodiment may choose to implement both service and device authentication, only service authentication or only device authentication as described in the previous embodiments.

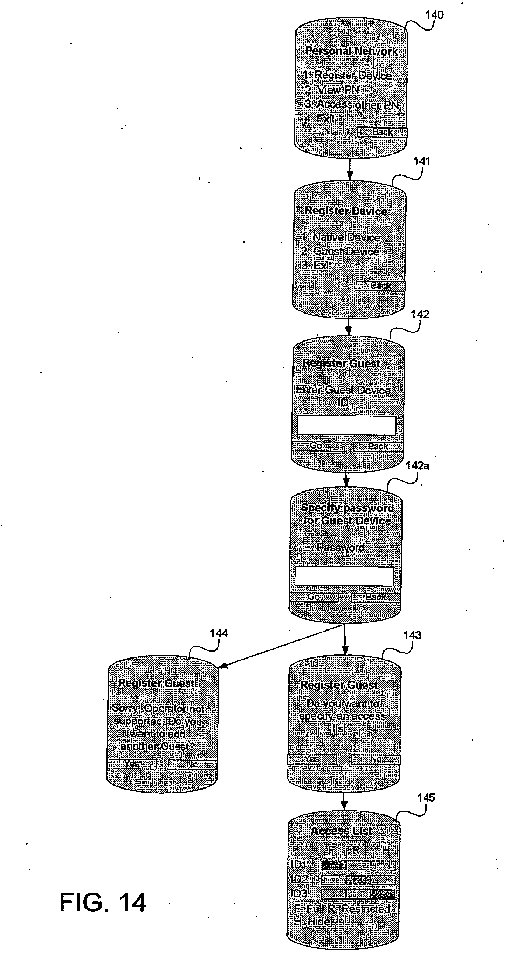

Figure 14, provides the user interfaces that the Master Device 16 may provide to enable addition of a Guest Device. As in step 140, the user is provided choices of registering a device, viewing his PN, or accessing other PNs. A user may be allowed to add a Native Device or a Guest Device as in step 141. An alternate implementation is to hide this detail from the user, and allow the user to only mention the ID of the device he wishes to add. PNM could have functionality to discover where the subscription of the device resides. In the next step of 142, the Guest Device ID is provided by the user. If the operator for this particular ID is supported, then the user is asked if an access list is to be issued for this particular Guest Device as in step 143. If the operator is not supported, the user may be provided a message that the particular operator is not supported. The user may also be prompted for nominating a password for the Guest Device as in step 142a.In step 145, the user may provide an list of access priorities for each of the devices. For example, as in this case, the user wishes to provide full access to ID1 while hiding the existence of ID3.

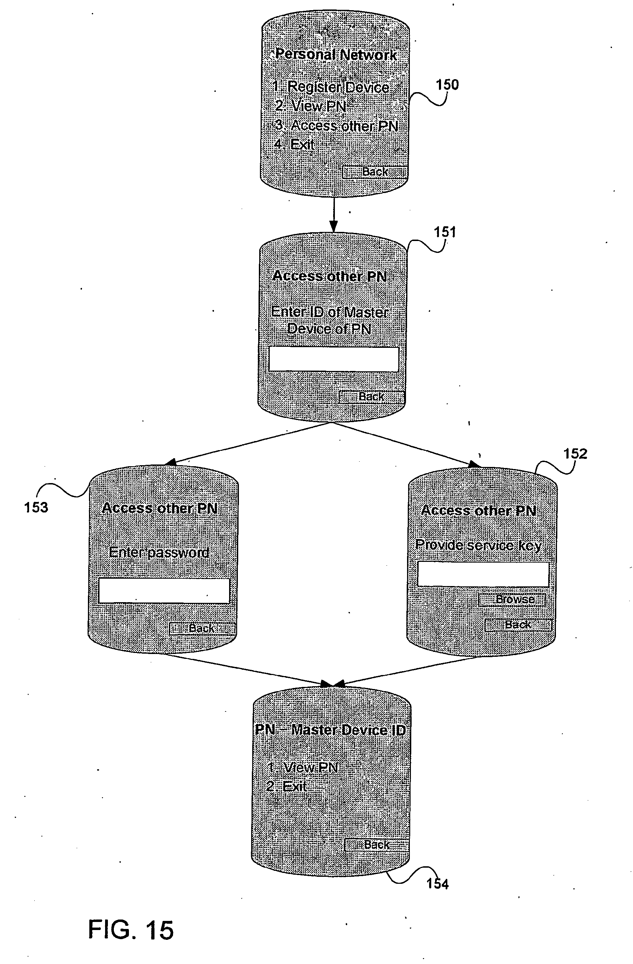

Figure 15, provides the user interface for a Guest Device for accessing PN. Step 150 provides the basic PN interface. When the user chooses to access other PN as in step 151, he may provide the Master Device ID. If the registration has been given based on a password, then step 153 may be followed, if the registration has been given based on a key, then step 152 may be provided. When the device has been service authenticated by the PNM, he may access the PN.

## Claims

1. A method for accessing a Personal Network from a Guest device, the method being
**characterized in that**:
(i) the Guest device receiving (211) a service key from a Master device of the Personal Network to which the Guest device wishes to access;
(ii) the Guest device sending (30) a Device ID of the Master device and its Device ID to a Proxy;
(iii) the Proxy associating a route for accessing the Master device from the Guest device based on the Device ID of the Master device and the Device ID of the Guest device, and sending an acknowledgement to the Guest device;
(iv) the Guest device sending (35) the service key and the Device ID of the Master device to a Personal Network Management entity; and
(v) the Personal Network Management entity verifying the service key to authenticate the Guest device

2. A method of claim 1,
wherein in the step (iii), the Proxy first verifying the Device ID of the Guest device to authenticate (32a) the Guest device, and then associating (33) a route for accessing the Master device from the Guest device.

## Patentansprüche

1. Verfahren zum Zugreifen auf ein persönliches Netzwerk über ein Gast-Gerät, wobei das Verfahren **dadurch gekennzeichnet ist, dass**
a) das Gast-Gerät einen Dienst-Schlüssel von einem Master-Gerät des persönlichen Netzwerks empfängt (211), auf das das Gast-Gerät zugreifen möchte;
b) das Gast-Gerät eine Geräte-Kennung des Master-Gerätes und seine Geräte-Kennung zu einem Proxy sendet (30);
c) der Proxy Verknüpfung mit einer Route zum Zugreifen auf das Master-Gerät von dem Gast-Gerät auf Basis der Geräte-Kennung des Master-Gerätes und der Geräte-Kennung des Gast-Gerätes herstellt und eine Bestätigung zu dem Gast-Gerät sendet;
d) das Gast-Gerät den Dienst-Schlüssel und die Geräte-Kennung des Master-Gerätes zu einer PNM-Einheit (Personal Network Management entity) sendet (35); und
3) die PNM-Einheit den Dienst-Schlüssel verifiziert, um das Gast-Gerät zu authentifizieren.

2. Verfahren nach Anspruch 1,
wobei in dem Schritt c) der Proxy zunächst die Geräte-Kennung des Gast-Gerätes verifiziert, um das Gast-Gerät zu authentifizieren (32a), und dann Verknüpfung mit einer Route zum Zugreifen auf das Master-Gerät von dem Gast-Gerät herstellt (33).

## Revendications

1. Procédé pour avoir accès à un Réseau Personnel à partir d'un dispositif Invité, le procédé étant **caractérisé en ce que** :
(i) le dispositif Invité reçoit (211) une clé de service en provenance d'un dispositif Maître du Réseau Personnel auquel le dispositif Invité souhaite avoir accès ;
(ii) le dispositif Invité envoie (30) un ID de Dispositif du dispositif Maître et son ID de Dispositif à un Mandataire ;
(iii) le Mandataire associe un chemin pour avoir accès au dispositif Maître à partir du dispositif Invité en se basant sur l'ID de Dispositif du dispositif Maître et sur l'ID de Dispositif du dispositif Invité, et envoie une confirmation au dispositif Invité ;
(iv) le dispositif Invité envoie (35) la clé de service et l'ID de Dispositif du dispositif Maître à une entité de Gestion de Réseau Personnel ; et
(v) l'entité de Gestion de Réseau Personnel vérifie la clé de service pour authentifier le dispositif Invité.

2. Procédé selon la revendication 1,
dans lequel, dans l'étape (iii), le Mandataire vérifie d'abord l'ID de Dispositif du dispositif Invité pour authentifier (32a) le dispositif Invité et associe ensuite (33) un chemin pour avoir accès au dispositif Maître à partir du dispositif Invité.
